(19) Europäisches Patentamt
European Patent Office
Office européen des brevets

(11) EP 0 583 774 B1

(12) EUROPEAN PATENT SPECIFICATION

(45) Date of publication and mention
of the grant of the patent:
**28.10.1998 Bulletin 1998/44**

(51) Int. Cl.$^6$: **A01N 65/00**, A01N 61/00
// (A01N65/00, 45:00, 37:36,
37:18, 37:10, 37:06, 37:02,
35:06, 31:04, 31:02, 25:32,
25:18), (A01N61/00, 25:32,
25:18)

(21) Application number: **93113148.6**

(22) Date of filing: **17.08.1993**

(54) **An arthropod control composition for plant protection**

Arthropoden bekämpfende Zusammensetzung für den Pflanzenschutz

Composition de contrôle des arthropodes pour la protection des plantes

(84) Designated Contracting States:
**AT BE CH DE DK ES FR GB GR IE IT LI LU MC NL PT SE**

(30) Priority: **18.08.1992 IL 102846**

(43) Date of publication of application:
**23.02.1994 Bulletin 1994/08**

(73) Proprietor:
**THE STATE OF ISRAEL-MINISTRY OF AGRICULTURE
Beit-Dagan (IL)**

(72) Inventor: **Moshav, Sitrya
Rehovot 73272 (IL)**

(74) Representative:
**Benedum, Ulrich Max, Dr. et al
Haseltine Lake Partners
Motorama Haus 502
Rosenheimer Strasse 30
81669 München (DE)**

(56) References cited:
**EP-A- 0 118 759        WO-A-79/00838
DE-A- 3 842 232        FR-A- 2 664 132
US-A- 5 030 660        US-A- 5 106 622**

- H.MARTIN 'THE SCIENTIFIC PRINCIPLES OF PLANT PROTECTION WITH SPECIAL REFERENCE TO CHEMICAL CONTROL' 1944 , EDWARD ARNOLD & CO. , LONDON, GB * page 80, paragraph 4 - page 81, paragraph 3 *
- PATENT ABSTRACTS OF JAPAN vol. 10, no. 269 (C-372) & JP-A-61 091 103 (EARTH CHEM) 9 May 1986
- DATABASE WPI Week 8530, Derwent Publications Ltd., London, GB; AN 85-181155 [30] & JP-A-60 109 503 (NIPPON OILS & FATS) 15 June 1985
- DATABASE WPI Week 8842, Derwent Publications Ltd., London, GB; AN 88-295913 [42] & JP-A-63 215 610 (ISHII) 8 September 1988
- DATABASE CAB CAB INTERNATIONAL, WALLINGFORD, OXON, GB AN: 89:90445 B.N.ISLAM 'Use of some extracts from Meliaceae and Annonaceae for control of rice hispa, Dicladispa armigera, and the pulse beetle, Callosobruchus chinensis.' & NATURAL PESTICIDES FROM THE NEEM TREE (AZADIRACHTA INDICA A.JUSS) AND OTHER TROPICAL PLANTS. PROCEEDINGS OF THE 3RD INTERNATIONAL NEEM CONFERENCE, NAIROBI, KENYA, 10-15 JULY 1986 pages 217 - 242 ED.: H.SCHMUTTERER ET AL.; PUB.: ESCHBORN, 1987, DE
- DATABASE WPI Week 8933, Derwent Publications Ltd., London, GB; AN 89-237681 [33] & JP-A-1 172 303 (TAISHO PHARMACEUT) 7 July 1989

## Description

### Field of the Invention

The present invention relates to arthropod control compositions for plant protection. More specifically said invention relates to the use of a vegetable oil for reducing the phytotoxicity of an arthropod control composition applied to foliage for plant protection comprising a Behavior-interfering Compound, agricultural oil and/or surface active compounds and diluents.

### Background of the Invention

Biocompatible Insect Control-agents (herein called "BICs") - i.e. pest control agents which pose little hazard to humans and to the environment have been known for many years and their number is steadily growing. BIC can act as insect behavioral modifiers (such as feeding and oviposition deterrents, repellents, etc.), hyperactivity inducers, knock down agents, physical barriers or physical poisons [J.J. Kabara (1987), Fatty Acids and Esters as Antimicrobial/insecticidal Agents. In G. Fuller and D. Nees (eds.): Ecology and Metabolism of Plant Lipids. Washington: ACS, pp. 220-238].

BIC are related to many chemical classes such as certain carboxylic acids, alcohols, esters, ethers, amides, terpenoids, limonoids, sulfides and heterocyclic compounds ([D.A. Carlson (1978) Repellents. In: Kirk. Othmer Encyclo. Chem. Technol. pp. 786-805].

Increasingly, BIC are used as alternatives for neurotoxic insecticides mainly for human protection with (DE 3,211,632) and without (Carlson 1978) oils but also for veterinary purposes and to control food and store insects (IL Patent No. 53570).

Many BIC possess properties which are highly desirable also for plant protection, mainly on account of their rapid and safe action. However, most BIC cannot be applied to foliage due to their phytotoxic nature (Kabara 1987). One solution to this problem is to formulate BIC in a way which decreases their phytotoxicity and at the same time preserves or promotes their activity against the target pest.

The team agricultural oils [L.S. Helser and F.W. Plapp (1986) Combinations of Oils and Similar Compounds with Insecticides: Effect on Toxicity and Leaf Residues. South. Entomol.: 75-81] is used rather loosely to describe different mixtures of lipophilic chemicals [such as mineral oils, vegetable (corp) oils (hereinafter called "VO") and silicones], which differ enormously in their on-leaf behavior [D. Veierov, M.J. Berlinger and A. Fenigstein (1988), The Residual Behavior of Fenpropathrin and Chlorpyrifos Applied as Aqueous Emulsions and Oil Solution to Greenhouse Tomato Leaves. Med. Fac. Landbouww, Gent 53:1535-1541]. Vegetable oils (VO) have bean used for many years directly for control of weeds, fungi and insects, and as solvents and additives in conventional pesticide formulations.

Oils of various types were found to increase penetration of pesticides into leaf interiors (Veierov 1988). This. in part, explained the enhanced phytotoxicity of herbicides when applied to foliar together with oils.

Many types of VO can retard foliage penetration of pesticides when the two ingredients are properly formulated together. Moreover, the pesticide residue is retained above the loaf surface available to the insect and protected from weathering [D. Veierov and M. Rumakom (1991), Optimization of Foliar-applied Formulations for the Control of the Tobacco Whitefly Under Field Condition. Final report to U.S. Agency of International Development: 140].

### Brief Description of the Invention

The present invention relates to the use of a vegetable oil for reducing the phytotoxicity of an arthropod control composition applied to foliage for plant protection comprising a Behavior-Interfering Compounds, agricultural oil and/or surface active compounds and diluents. The Behavior-Interfering Compound is any known conventional compound that can interrupt or alter the normal behavioral sequences of the target. The agricultural oil can be a vegetable oil.

### Detailed description of the Invention

The present invention relates to the use of a vegetable oil for reducing the phytotoxicity of an arthropod control composition applied to foliage for plant protection comprising a Behavior-Interfering Compound, agricultural oil and/or surface active compound (emulsifiers) and diluents (such as water or an appropriate organic solvents).

According to the present invention BICs phytotoxicity is masked and their efficacy is increased by formulating them with vegetable oils (agricultural oils) in the absence or presence of additional adjuvants.

Crop oils masks BIC phytotoxicity by reducing the contact between the BIC residue and leaf-surface, or by retarding BIC foliar penetration. The efficacy of BIC is promoted due to the action of the oil component as synergist and/or a complementary control measure. The oil component acts also as an extender.

Formulation of BIC with the vegetable oil resulted in a very fast and persistent action, which is a prerequisite to con-

2

trol of some of the most serious types of agricultural pests.

Quick action is required to prevent the settling of migration stages of the target pest, and to deter egg deposition and/or virus transmission.

Persistent action guarantees prolonged protection both by repelling migrating stages and by killing the less mobiles ones (such as certain types of larvae).

In summary, BIC functions are: a) To provide fast activity as behavior modifiers, knock-down agents and/or physical barriers. b) To extend the effective duration of the oil residue.

Vegetable oil function: a) To reduce phytotoxicity. b) To synergise, or to provide complementary control activity. c) To extend BIC effective duration.

The BIC is any known conventional compound that can interrupt or alter the normal behavioral sequences of the target. The BIC can be any repellent or deterrent agent, hyperactivity inducer or irritant, narcotic, knock-down agent or physical barrier agent. Examples are $C_{10}$-$C_{22}$ alcohols, $C_{10}$-$c_{22}$ carbonyle compounds and terpenoids. More specifically the BIC is selected from methyl-nonyl keton, N-butyl acetanilide, N,N-diethyl-3-methylbenzmide (DEET), dibutyl phthalate, dimethyl phthalate, dibutyl succinate, dibutyl adipate, butopyronoxyl (Indalone), butoxypoly (propylene glycol), benzyl benzoate, 2-ethyl-1,3-hexanediol, 2-butyl-2-ethyl-1,3-propanediol, 2-hydroxyethyl n-octyl sulfide, oitronellel, camphor, camphene, terpinen-4-ol, linalool, isoborneol, borneol, isobornyl acetate, bornyl acetate, phytol, β-farnesene, lauryl alcohol, cetyl alcohol, oleyl alcohol, myristic acid, stearic acid.

The agricultural oil according to the present invention can be a vegetable oil. Said vegetable oil can be selected from cottonseed oil, soybean oil, rapeseed oil, castor oil, sunflower oil, groundnut oil, palm oil, safflower oil, coconut oil, sesame oil, corn oil and linseed oil.

The composition according to the present invention can be used against many types of arthropods e.g. sucking arthropods. Said composition can be applied against whiteflies (Aleurodidea) and aphids (Aphidoidea).

The present invention relates also to a method for protection of plants against arthropod comprising application or spraying of the arthropod control composition defined in claim 1 to the plants leaves.

The invention will be clarified and exemplified by means of the following examples. Said examples are in no way intended to limit the scope of the invention.

Formulation Examples

Example 1.

a) Emulsifiable concentrate (without co-solvent)

6-24     parts of active ingredient 88-70 parts of vegetable oil
6        parts of surfactant (high hlb surfactant such as Tween 80 & Tween 20)

b) Emulsifiable concentrate (including co-solvent)

15     parts of active ingredient
41     parts of vegetable oil
41     parts of aromatic co-solvent (such as xylene)
3      parts of surfactant (preferably high hlb surfactant such as Tween 80 or Tween 20).

c) Emulsifiable concentrate (including co-solvent)

5      parts of active ingredient
16     parts of vegetable oil
78     parts of polar co-solvent (such as ethanol)
1      parts of surfactant (preferably high hlb surfactant such as Tween 80 or Tween 20).

By dilution of such a concentrate with water it is possible to prepare emulsions of the desired concentration which are especially suitable for leaf application.

d) Oil solution (for Ultra Low Volume spray)

1-3     parts of active ingredient
7-9     parts of vegetable oil
0-1     parts of surfactant (preferringly high hlb surfactant such as Tween 80 or Tween 20)

Biological Examples: PHYTOTOXICITY TESTS

Example 2.

Greenhouse test: The phytotoxicity of BIC+VO emulsions (examples 1a-d) was compared to that of emulsions of the separated components and to untreated controls. The emulsions were sprayed onto potted seedlings of cotton (Acala SJ-2) and tomato (Marmande) at the 4 leaf stage, and to pepper (Wyndal) and cucumber (Beit Alfa) at the 2 leaf stage. Sprays beyond runoff were made with hand-held sprayer at 4-6 psi. Discrete drops sprays (Ultra Low Volume, ULV) were applied with a commercial aerodynamic atomizer (Atomist, Root-Lowell Crop., U.S.A.). To ensure LV-spray uniformity the potted plants were placed individually on a rotating table in front of the sprayer. The treated plants were held under greenhouse at average minimum and maximum temperatures were 15 and 22°C, respectively. Leaf damages were determined twice, 7 and 14 days post treatments. Individual leaves were visually assessed by averaging give samples, each consists of ten potted plants. A rating of 0, 1, 2, 3, 4 indicated <1%, 1-10%, 11-25%, 26-50%, >50% average leaf damage respectively.

For all test plant species, treatments with BIC+VO formulations resulted in significantly lower level of foliar damage than treatment with BIC alone:

| Chemical[1] | Oil | Injury Indices on the Indicated Test Plants | | | | Comments[2] |
|---|---|---|---|---|---|---|
| | | Cotton | Tomato | Paper | Cucumber | |
| | | Esters | | | | |
| BP | (-) | 4 | 4 | 4 | | |
| BP | (-) | 4 | 4 | 4 | | ULV |
| BP | Cottonseed oil | 0 | 0 | 0 | | |
| BP | Cottonseed oil | 0 | 0 | 0 | | ULV |
| BP | Rapeseed oil | 0 | 0 | 0 | | |
| BP | Castor oil | 0 | 0 | 0 | | |
| BP | Soybean oil | 0 | 0 | 1 | | |

| Chemical[1] | Oil | Injury Indices on the Indicated Test Plants | | | | Comments[2] |
|---|---|---|---|---|---|---|
| | | Cotton | Tomato | Paper | Cucumber | |
| BNBN | (-) | 4 | 4 | 4 | | |
| BNBN | (-) | 4 | | | | ULV |
| BNBN | Cottonseed oil | 0 | 1 | 1 | | |
| BNBN | Cottonseed oil | 0 | | | | ULV |
| BNBN | Rapeseed oil | 0 | 0 | | | |
| BNBN | Castor oil | 0 | 1 | 0 | | |
| BNBN | Soybean oil | 1 | 3 | 2 | | |
| | | Carboxylic acids | | | | |
| MAc | (-) | 0 | 2 | 2 | 3 | |
| MAc | Cottonseed oil | 0 | 0 | 0 | 0 | |
| MAc | Cottonseed oil | 0 | 0 | 0 | 0 | |
| MAc | Cottonseed oil | 0 | 0 | 0 | 0 | Ethanol |
| MAc | Cottonseed oil | 0 | 1 | 0 | 1 | Xylene |
| MAc | Rapeseed oil | 0 | 0 | 0 | 0 | |
| SAc | (-) | 0 | 0 | 2 | 2 | Xylene |
| SAc | Cottonseed oil | 0 | 0 | 0 | 0 | Xylene |
| | | Fatty alcohols | | | | |
| CAl | (-) | 0 | 1 | 2 | 2 | |
| CAl | Cottonseed oil | 0 | 0 | 0 | 0 | |
| CAl | Rapeseed oil | 0 | 0 | 0 | 0 | |
| CAl | Soybean oil | 0 | 0 | 0 | 0 | |
| LAl | (-) | 3 | 4 | 3 | | |
| LAl | Cottonseed oil | 0 | 0 | 1 | | |
| LAl | Rapeseed oil | 0 | 0 | 0 | | |
| LAl | Soybean oil | 2 | 3 | 2 | | |
| | | Terpenoids | | | | |
| TER. MIX. | (-) | 4 | 4 | | | |
| TER. MIX. | Cottonseed oil | 0 | 2 | | | Ethanol |
| TER. MIX. | Cottonseed oil | 0 | 1 | | | |
| 5\ Miscellaneous | | | | | | |
| Deet | (-) | 4 | | | | |
| Deet | Castor oil | 1 | | | | |
| MGK-874 | (-) | 4 | | | | |
| MGK-874 | Castor oil | 1 | | | | |

| Chemical[1] | Oil | Injury Indices on the Indicated Test Plants | | | | Comments[2] |
|---|---|---|---|---|---|---|
| | | Cotton | Tomato | Paper | Cucumber | |
| | | Oils & Untreated | | | | |
| (-) | (-) | 0 | 0 | 0 | 0 | |
| (-) | Cottonseed oil | 0 | 0 | 0 | 0 | |
| (-) | Rapeseed oil | 0 | 0 | 0 | 0 | |
| (-) | Soybean oil | 0 | 0 | 0 | 0 | |
| (-) | Castor oil | 0 | 0 | 0 | | |

1    BNBN = Benzyl benzoate, BP = dibutyl phthalate, CAl = cetyl alcohol, Deet (0.2%) = N,N-diethyl-m-toluamide, LAl = lauryl alcohol, MGK-874 (0.2%) = 2-hydroxy-n-octyl sulfide, MAc = myristic Acid, SAc = Stearic acid, TER.MIX = terpenoid mixture consists of Phytol (0.5%) + Linalool (0.25%) + Geraniol (1%) + Carvone (0.25%). BIC concen. = 1% wt/wt, formulated with no co-solvent, if not specified otherwise.

2    Ethanol = contains 3% ethanol, LV = low volume spray, Xylene = contains 3% xylene.

Example 3.

Field test: Commercial cotton (H-23) was sown in regular row width (96.5cm) during mid April 1991 in Kibbutz Ein-Hahoresh, Israel. Drip irrigation (385m$^3$ water per 1000m$^2$) and other standard agronomic practices were employed including insecticides sprayed against moths and aphids (combination of Thionex 350g/1000m$^3$ + Supracide 250g/1000m$^3$ on 21th June 1991 and Monocron 200g/1000m$^3$ on 6th September 1991). The plots were sprayed twice by BIC+VO emulsions (on 8th and 14th August 1991) at 70 liter/1000m$^3$ rate using a portable mist blower.

Prior to the commercial harvest (6th October 1991), 25 bolls were sampled from the inner rows of each replicate and weighed and ginned. Lint quality was assessed by standard tests in the laboratories of the Cotton Production and Marketing Board Ltd., Herzellia, Israel. Foliar injuries assessed visually as described in Example 2.

No phytotoxic symptoms or significant changes in agronomic traits were found on plots treated with BIC+VO formulations compared to the control plots; plots treated with BIC alone suffered heavy foliar damage.

| Chemical[1] | Oil[2] | Injury Index | Boll Size (gr.) | Lint % | Sugars % | Homogeneity |
|---|---|---|---|---|---|---|
| Control | | 0 | 7.8 | 40.3 | 0.032 | 85.0 |
| (-) | Cottonseed oil | 0 | 7.0 | 39.8 | 0.026 | 86.2 |
| BP | (-) | 4 | (-) | (-) | (-) | (-) |
| BP | Cottonseed oil | 0 | 7.0 | 39.9 | 0.024 | 86.2 |
| CAI | Cottonseed oil | 0 | 7.5 | 40.0 | 0.036 | 85.9 |
| LAI | Cottonseed oil | 0 | 7.7 | 40.7 | 0.027 | 85.0 |
| Control | | 0 | | | | |
| (-) | Soybean oil | 0 | | | | |
| BP | (-) | 4 | | | | |
| BP | Soybean oil | 0 | | | | |
| CAI | Soybean oil | 0 | | | | |
| LAI | Soybean oil | 0 | | | | |

1 1% wt/wt aqueous emulsion of BP = dibutyl phthalate, CAI = cetyl alcohol, LAI = lauryl alcohol.
2 Oil concentration = 30%.

Biological Examples: BIOACTIVITY TESTS:

Example 4.

Tobacco Whitefly adults response to various BIC: Tobacco Whitefly, (TWF, Bemisia tabaci) was reared on cotton seedlings in green house. Female whiteflies ware caught with aspirator equipped with a contraption, and transfered to clip-on leaf cage (transparent cylinder, base diameter 2cm, height 7cm).

The leaf cages, each containing twenty females, were attached to the lower side of leaves of pre-treated cotton seedlings. The cotton seedlings had been sprayed to runoff with BIC and BIC+VO and held under controlled conditions for various aging intervals.

TWF settling and mortality were recorded after exposures of 1.5, 5, and 24 hr. Mortality results were corrected according to Abbott's formula [W.S. Abbott, J. Econ Entomol. 18:265-267 (1925)]; settling deterrence was expressed as Settling Ratio ( SR=[T/C] , where T & C are the percentage of adults settled on treatment and control respectively after t hours of exposure). All experiments replicated 9-12 times.

A strong settling deterrence followed by death of TWF-adults were observed for the various BIC types. The activity of all combinations were stronger than those of each component separately (in several cases activity of BIC alone could not be measured due to severe leaf injuries).

| Chemical[1] (% wt/wt) | Settling Ratio (%) After the[2] | | Mortality (%) After the[2] | | Plant Injury Index[3] |
|---|---|---|---|---|---|
| | 4 hr. | 24 hrs. | 4 hrs. | 24 hrs. | |
| Oil alone | | | | | |
| CO | 20 | 62 | 0 | 37 | 0 |
| CO (4%) | 18 | 62 | 0 | 43 | 0 |
| Aromatic esters | | | | | |
| BP | (-) | (-) | (-) | (-) | 4 |
| BP + CO | 0 | 0 | 39 | 99 | |
| BNBN | (-) | (-) | (-) | (-) | 4 |
| BNBN + CO | 0 | 0 | 27 | 100 | |
| Aliphatic esters | | | | | |
| BS | 123 | 100 | 0 | 0 | 1 |
| BS + CO | 0 | 7 | 4 | 61 | 0 |
| Carboxylic acids | | | | | |
| MAc | 31 | 83 | 0 | 3 | 0 |
| MAc + CO | 0 | 12 | 3 | 56 | 0 |
| MAc+CAl + CO | 1 | 2 | 12 | 72 | 0 |
| Fatty alcohols | | | | | |
| CAl | 76 | 98 | 0 | 0 | 0 |
| CAl + CO | 12 | 29 | 5 | 65 | 0 |
| OAl + CO | 2 | 10 | 0 | 86 | 0 |
| Terpenoids | | | | | |
| TER. MIX. | (-) | (-) | (-) | (-) | 4 |
| TER. MIX. + CO | 15 | 17 | 26 | 76 | 0 |
| Camphene | 125 | 100 | | | 0 |
| Camphene + CO | 58 | 42 | 6 | 31 | 0 |
| Camphor + CO | 9 | 20 | (-) | 75 | 0 |
| Miscellaneous | | | | | |
| ETH | 83 | 97 | 0 | 0 | 4 |
| ETH + CO | 6 | 31 | 0 | 48 | 2 |

1 Aqueous emulsions of BNBN = benzyl benzoate, BP = dibutyl phthalate, BS = dibutyl sebacate, CAl = cetyl alcohol, CO = cottonseed oil, ETH = 2-Ethyl-1,3-hexanediol, LAl - lauryl alcohol, MAc = myristic Acid, MAc+CAl (0.5% of each), OAl = Oleyl alcohol, TER. MIX. = terpenoid mixture consists of Phytol (0.5%) + Linalool (0.25%) + Geraniol (1%) + Carvone (0.25%), CO concen. = 3% and BIC concen. = 1% wt/wt, formulated with no co-solvent, if not specified otherwise.
2 Three days post spray to cotton seedlings.
3 A rating of 0, 1, 2, 3, 4 indicated <1%, 1-10%, 11-25%, 26-50%, > 50% an average leaf damage.

Example 4: CONTINUED

(Response of Tobacco Whitefly adults to various BIC)

| CHEMICALS[1] (%wt/wt) | SETTLING RATIO (%) AFTER[2] | | MORTALITY (%) AFTER[2] | | PLANT INJURY INDEX[3] |
|---|---|---|---|---|---|
| | 4h | 24h | 4h | 24h | |
| Carboxylic acids | | | | | |
| CIA | 100 | 93 | 0.5 | 2.8% | 0 |
| CIA | 1.6 | 2.6 | 6.0 | 94 | 0 |
| MALE + (X) | 34.8 | 8.3 | 34.4 | 86.6 | 0 |
| MALI + CO | 0 | 0.3 | 27 | 98.5 | 0 |
| SUCC + CO | 34.8 | 8.6 | 7.8 | 62.3 | 0 |

1 CIA= citric acid, MALE= Maleic acid, MALI= malic acid, SUCC= succinic acid, CO= cottonseed oil, CO concen.=3% and BIC concen.= 1% wt/wt, formulated with no cosolvent, if not specified otherwise.
2 Three days post spray to cotton seedlings.
3 A rating of 0, 1, 2, 3, 4 indicated <1%, 1-10%, 10-25%, 25-50%, >50% an average leaf damage.

Example 5.

TWF adults response to dibutyl phthalate in combination with various vegetable oils (VO): performed as described in example 3.
The four vegetable oil + dibutyl phthalate combinations showed a very strong and persistent deterrence followed by death of TWF adults:

| Days Post-Spray | Oil type | Settling Ratio[2] (%) | | Mortality (%) | |
|---|---|---|---|---|---|
| | | Oil alone | Oil + BP | Oil alone | Oil + BP |
| 2 | Cottonseed | 1.1 | 0.0 | 69 | 99 |
| | Soybean | 2.0 | 0.0 | 91 | 100 |
| | Rapeseed | 2.3 | 0.0 | 72 | 100 |
| | Castor | 5.9 | 0.0 | 91 | 100 |
| 7 | Cottonseed | 85 | 7.3 | 15 | 75 |
| | Soybean | 90 | 12.3 | 6.8 | 69 |
| | Rapeseed | 0.0 | 0.0 | 83 | 100 |
| | Castor | 5.5 | 0.0 | 72 | 99 |
| 17 | Cottonseed | 84 | 7.0 | 0.9 | 37 |
| | Soybean | 90 | 12.0 | 0.0 | 56 |
| | Rapeseed | 5.3 | 0.0 | 54 | 98 |
| | Castor | 9.1 | 0.0 | 44 | 95 |

1 Aqueous emulsions of 3% oil and of 3% oil + 1% dibutyl phthalate.
2. SR = (T/C) , where T & C are the percentage of adults settled on treatment and control respectively.

Example 6.

Responses of development stages of TWF to various BIC: Cotton seedlings sprayed with BIC combinations and with cottonseed oil and were held indoors (25°C). A week postspray, leaf cages, each containing twenty females, were attached to the lower leaf side for 24 hours. The number of eggs laid was counted under binocular microscope and compared with the control. The nymphs developing from the eggs, until the pupal stage, were counted 15-17 days after oviposition.

Seven-days old residues of CAI+CO and LAI+CO were active against developmental stages, whereas BP+CO residue was still active primarily against adults.

| Chemicals[1] | Mortality of Adults (%) | No. Eggs per Female | Relative No. Eggs per Female | Relative No. Pupae per Female | Relative No. Pupa Per Eggs |
|---|---|---|---|---|---|
| Control | 0 | 5.6 | 100 | 100 | 100 |
| CO (4%) | 15 | 4.2 | 75 | 39 | 52 |
| BP + CO | 91 | 0 | 0 | 0 | 0 |
| CAI + CO | 15 | 2.5 | 45 | 7 | 16 |
| LAI + CO | 4 | 4.7 | 75 | 15 | 20 |

1 Aqueous emulsions of CO = cottonseed oil, BP = dibutyl phthalate, CAI = cetyl alcohol, LAI - lauryl alcohol, Concentrations (% wt/wt) were CO=3%, BIC=1%, when not specified otherwise.

Example 6: CONTINUED. (Responses of development stages of TWF to various BIC)

| CHEMICALS[1] | MORTALITY OF ADULTS (%) | NO. EGGS PER FEMALE | RELATIVE NO. EGGS PER FEMALE (Con=100%) | RELATIVE NO. PUPAE PER FEMALE (Con=100%) | RELATIVE NO. PUPA PER EGGS (Con=100%) |
|---|---|---|---|---|---|
| Non-treated | 0 | 4.7 | 100 | 100 | 100 |
| CO (4%) | 15 | 3.5 | 75 | 39 | 100 |
| CIA | 0 | 5.3 | 114 | 116 | 103 |
| CIA + CO | 90 | 0.2 | 4.5 | 3.3 | |
| MALE + CO | 87 | 0.1 | 3.0 | 0.6 | 20 |
| SUCC + CO | 62 | 0.2 | 6.0 | 6.0 | 100 |
| MMYR | 0 | 5.7 | 122 | 89 | 73 |
| MMYR + CO | 2 | 3.7 | 79 | 31 | 39 |

1 Aqueous emulsions of CO= cottonseed oil, CIA= Citric acid, MALE= Maleic z acid, SUCC= succinic acid, MMYR= methyl myristate. Concentrations (% wt/wt) were CO=3% , BIC=1%, when not specified otherwise.

Responses of development stages of TWF to direct spray of various BIC Cotton seedlings infested with developmental stages of TWF were sprayed to runoff, after counting the eggs or the larvae presented. The plants were held under controlled conditions and the fraction of an immature stage developed into adults were measured and compared to that of the untreated control. The spray toxicity of BIC + OIL against various developmental stages of TWF is demonstrated in the following example.

| Chemicals[1] | % Survival of whitefly after direct spray of the indicated immature stage | | | | |
|---|---|---|---|---|---|
| | Egg | L1 | L2 | L3 | L4(P) |
| CO (4%) | 87 | 3.60 | 1.90 | 4.65 | 9.09 |
| LAL +CO | 49 | 0.00 | 0.28 | 0.00 | 0.74 |
| CAL +CO | 59 | 1.33 | 9.30 | 12.90 | 66.7 |
| SAL +CO | 93 | 0.74 | 0.27 | 0.22 | 13.0 |
| OAL +CO | 56 | 0.00 | 1.15 | 0.24 | 0.18 |

1 Aqueous emulsions of: CO= cottonseed oil, LAL= lauryl alcohol, CAL= cetyl alcohol, SAL= stearyl alcohol, OAL= Oleyl alcohol. Concentrations (%wt/wt) were CO= 3%, BIC= 1%, when not specified otherwise
2 L1= 1st instar nymph, L2=2nd instar nymph, L3=3rd instar nymph, L4= 4th instar nymph (pupa)
3 Survival = ratio of fractions of: treated to untreated immature stage developed into adults

Example 7.

Test of Dibutyl phthalate + VO combination as protectant against non-persistent virus transmitted by Aphids (Myzus persicae): Healthy cucumber seedlings (Beit Alfa) which served as a test plants were sprayed to runoff with BIC+VO combinations and allowed to dry, 1%-Virol spray was used as standard treatment. The control leaves ware sprayed with surfactant solution. Aphid adults apterae (Myzus persicae), starved for 2 hours, were allowed 3 minutes access to untreated infected cucumber which served as a source for the non-persistent Zucchini Yellow Mosaic Virus (ZYMV). The aphids were subsequently confined for 24 hours on test plants by placing a tube around each test plant, and the survivors were killed. The test seedlings were allowed to grow until no more plants developed symptoms.

BIC+VO combination prevented completely the plant disease transmission, whereas VO emulsions and the standard mineral oil (Virol) sprays were less effective.

| Oil type | Transmission (%) | | Relative Transmission (%) (control = 100%) | |
|---|---|---|---|---|
| | Oil alone | Oil + BP | Oil alone | Oil + BP |
| Cottonseed | 24 | 0.0 | 40 | 0.0 |
| Soybean | 33 | 0.0 | 55 | 0.0 |
| Virol[1] | 36 | (-) | 60 | (-) |
| Control | 60 | (-) | 100 | (-) |

1 1% = mineral oil applied as an aqueous emulsion (a standard treatment).

Example 8,

Control of TWF under field conditions: commercial cotton (H-23) was sown in regular row width (96.5 cm) during mid April 1991 in Kibbutz Ein-Hahoresh, Israel. Drip irrigation (385m$^3$ water per 1000m$^2$) and other standard agronomic practices except sprays against Bemisia tabaci were employed.

Experimental plots were arranged in a randomized complete-block design with four replications per treatment. Each plot consisted of four rows X 12m long with untreated plots separating replicates. The plots were sprayed twice by BIC+VO emulsions (on 8th and 14th August 1991) at 70 liter/1000m$^3$ rate using portable mist blower. Leaves samples consisted of 10 leaves per replicate were collected the fifth node from the top of the main stem, twice a week started on 14th August 1991. Number of all living larvae and pupae (neonate excluded) on each sampled leaf was determined by the aid of magnifying glass (x10).

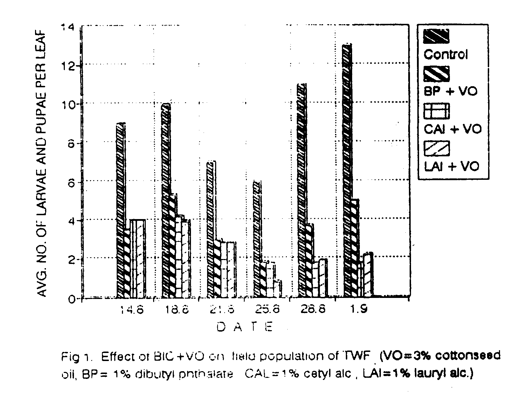

The ability of the three types of BIC+VO combinations to control field population of TWF is demonstrated in Fig. 1.

**Claims**

1. Use of a vegetable oil for reducing the phytotoxicity of an arthropod control composition which is based on one or more essentially non-toxic Behaviour-Interfering Compounds selected from the group comprising:

   C10-C22 alcohols, lauryl alcohol, cetyl alcohol, oleyl alcohol, myristyl alcohol, stearyl alcohol, 2-ethyl-1,3-hexanediol, 2-butyl-2-ethyl-1,3-propanediol;
   C10-C22 carbonyl compounds, methyl-nonyl ketone, butopyronoxyl (indalone), citronellal, citral;
   C10-C22 carboxylic acids, myristic acid, stearic acid;
   terpenoids, camphor, camphene, terpinen-4-ol, isoborneol, borneol, isobornyl acetate, bornyl acetate, phytol, β-farnesene, farnesol, geraniol, terpineol, p-cymene, ocimene, limonene, thymol, pinene;
   polybasic carboxylic acids, oxalic acid, fumaric acid, succinic acid, malic acid, fumaric acid, maleic acid, oleic acid;
   substituted mono and polybasic carboxylic acids, adipic acid, sebacic acid, lactic acid, tartaric acid, citric acid, aconitic acid, acidoleic acid, sorbic acid;
   N-butylacetanilide, N,N-diethyl-3-methylbenzmide (DEET, N,N-diethyl-m-toluamide), benzyl benzoate, 2-hydroxyethyl n-octyl sulfide (MGK-874); butoxypoly(propylene glycol);
   esters of carboxylic acids, dimethyl phthalate, diethyl phthalate, dibutyl phthalate, dibutyl succinate, dibutyl sebacate, dibutyl adipate, myristate esters, methyl myristate.

2. Use of a vegetable oil as claimed in claim 1, wherein the Behaviour-Interfering Compound is mixed with a surface active compound and/or diluents.

3. Use as claimed in claim 1 or 2, wherein the Behaviour-Interfering Compound is a repellent or deterrent agent, hyperactivity inducer or irritant, narcotic, knock-down agent, physical barrier agent or physical poison.

4. Use as claimed in any claim 1 to 3, wherein the vegetable oil is selected from cottonseed oil, soybean oil, rapeseed oil, castor oil, sunflower oil, groundnut oil, palm oil, safflower oil, coconut oil, sesame oil, corn oil, linseed oil, tung oil and kernel oil.

5. Use as claimed in any claim 1 to 4, wherein the diluent is water or an appropriated organic solvent.

6. Use as claimed in any claim 1 to 5, wherein the arthropod control composition is for the protection of plants against sucking arthropods.

7. Use as claimed in any claim 1 to 5, wherein the arthropod control composition is for the protection of plants against whiteflies (*Aleurodidea*) and aphids (*Aphidoidea*) and soft-bodied organisms such as mites, hoppers, mealy bugs and thrips.

8. Use as claimed in any preceding claim, wherein the arthropod control composition is made up for an application by spraying.

9. Use of a vegetable oil as claimed in any preceding claim, wherein the Behaviour-Interfering Compound is selected from di-butyl-sebacate, di-butyl phthalate, cetyl alcohol, lauryl alcohol, oleyl alcohol, stearyl alcohol, benzyl benzoate, maleic acid, malic acid, succinic acid, methyl myristate, myristic acid, stearic acid, DEET, MGK-874, 2-ethyl-1,3-hexandiol, camphene camphor, citric acid, phytol, linalool, geraniol, carvone, and the vegetable oil is selected from cottonseed oil, soybean oil, rapeseed oil, castor oil.

**Patentansprüche**

1. Verwendung eines Pflanzenöls zur Verminderung der Phytotoxizität einer Zusammensetzung zur Beherrschung der Arthropoden, die auf ein oder mehreren im wesentlichen nicht-toxischen, auf das Verhalten einwirkerden Verbindungen beruht, ausgewählt aus der Gruppe, umfassend

$C_{10}$-$C_{22}$-Alkoholen, Laurylalkohol, Cetylalkohol, Oleylalkohol, Myristylalkohol, Stearylalkohol, 2-Ethyl-1,3-hexandiol, 2-Butyl-2-ethyl-1,3-propandiol;

$C_{10}$-$C_1$-Carbonyl-Verbindungen, Methylnonylketon, Butopyronoxyl (Indalon), Citronellal, Citral;

$C_{10}$-$C_{22}$-Carbonsäuren, Myristinsäure, Stearinsäure;

Terpenoiden, Campher, Camphen, Terpinen-4-ol, Isoborneol, Borneol, Isobornylacetat, Bornylacetat, Phytol, β-Farnesol, Farnesol, Geraniol, Terpineol, p-Cymol, Ocimen, Limonen, Thymol, Pinen;

Polycarbonsäuren, Oxalsäure, Fumarsäure, Bernsteinsäure, Malonsäure, Fumarsäure, Maleinsäure, Ölsäure;

substituiertes Mono- und Polycarbonsäuren, Adipinsäuren, Sebacinsäure, Milchsäure, Weinsäure, Zitronensäure, Aconitsäure, Acidoleinsäure, Sorbonsäure;

N-Butylacetanilid, N,N-Diethyl-3-methylbenzamid (DEET, N,N-Diethyl-m-toluamid), Benzylbenzoat, 2-Hydroxyethyl-n-octylsulfid (MGK-874); Butoxypoly(propylenglycol);

Ester der Carbonsäuren, Dimethylphthalat, Diethylphthalat, Dibutylphthalat, Dibutylsuccinat, Dibutylsebacat, Dibutyladipat, Myristatester, Methylmyristat.

2. Verwendung eines Pflanzenöls nach Anspruch 1, wobei die auf das Verhalten einwirkende Verbindung vermischt wird mit einer oberflächenaktiven Verbindung und/oder Verdünnungsmitteln.

3. Verwendung nach Anspruch 1 oder 2, wobei die auf das Verhalten einwirkende Verbindung ein Abstoßungs- oder ein Abschreckungsmittel ist, ein Inducer für Hyperaktivität oder ein Reizmittel ist, ein Narkotikum, ein Knock-down-Mittel, ein physikalisches Hemmmittel oder ein physikalisches Gift.

4. Verwendung nach irgendeinem Anspruch 1 bis 3, wobei das Pflanzenöl ausgewählt ist aus Baumwollsamenöl, Sojabohnenöl, Rapsöl, Rizinusöl, Sonnenblumenöl, Arachisöl, Palmöl, Carthamusöl, Kokusnussöl, Sesamöl, Maisöl, Leinöl, Tungöl und Kernöl.

5. Verwendung nach irgendeinem Anspruch 1 bis 4, wobei das Verdünnungsmittel Wasser ist oder ein geeignetes organisches Lösungsmittel.

6. Verwendung nach irgendeinem Anspruch 1 bis 5, wobei die Zusammensetzung zur Beherrschung der Arthropoden zum Schutz der Pflanzen vor saugenden Arthropoden ist.

7. Verwendung nach irgendeinem Anspruch 1 bis 5, wobei die Zusammensetzung zur Beherrschung der Arthropoden zum Schutz der Pflanzen gegen Homoptera (Aleurodidea) und Blattläuse (Aphidoidea) und Weichkörpertiere wie Milben, Heuschrecken, Pseudococcida (Mealybugs) und Thysanoptera.

8. Verwendung nach irgendeinem vorhergehenden Anspruch, wobei die Zusammensetzung zur Beherrschung der Arthropoden vorbereitet ist für eine Anwendung durch Sprühen.

9. Verwendung eines Pflanzenöls nach irgendeinem vorhergehenden Anspruch, wobei die auf das Verhalten einwirkende Verbindung ausgewählt ist aus Dibutylsebacat, Dibutylphthalat, Cetylalkohol, Laurylalkohol, Oleylalkohol, Stearylalkohol, Benzylbenzoat, Maleinsäure, Malonsäure, Bernsteinsäure, Methylmyristat, Myristinsäure, Stearinsäure, DEET, MGK-874, 2-Ethyl-1,3-hexandiol, Camphen, Campher, Zitronensäure, Phytol, Linalool, Geranial, Carvon und das Pflanzenöl ausgewählt aus Baumwollsamenöl, Sojabohnenöl, Rapsöl, Rizinusöl.

## Revendications

1. Utilisation d'une huile végétale pour la réduction de la phytotoxicité d'une composition de contrôle des arthropodes qui est à base d'un ou de plusieurs composés interférant sur le comportement, essentiellement non toxiques, choisis au sein du groupe comprenant :

- les alcools $C_{10}$-$C_{22}$, l'alcool laurylique, l'alcool cétylique, l'alcool oléylique, l'alcool myristylique, l'alcool stéarylique, le 2-éthyl-1,3-hexanediol, le 2-butyl-2-éthyl-1,3-propanediol ;
- les composés carbonyle $C_{10}$-$C_{22}$, la méthylnonylcétone, le butopyronoxyle (indalone), le citronellal, le citral ;
- les acides carboxyliques $C_{10}$-$C_{22}$, l'acide myristique, l'acide stéarique :
- les terpénoïdes, le camphre, le camphène, le terpinèn-4-ol. l'isobornéol, le bornéol, l'acétate d'isobornyle, l'acétate de bornyle, le phytol, le β-farnésol, le farnésol, le géraniol, le terpinéol, le p-cymène, l'ocimène, le limonène, le thymol, le pinène :

- les acides carboxyliques polybasiques, l'acide oxalique, l'acide fumarique, l'acide succinique, l'acide malique, l'acide fumarique, l'acide maléique, l'acide oléique ;
- les acides carboxyliques mono et polybasiques substitués, l'acide adipique, l'acide sébacique, l'acide lactique, l'acide tartrique, l'acide citrique, l'acide aconitique, l'acide acidoléique, l'acide sorbique ;
- le N-butylacétanilide, le N,N-diéthyl-3-méthylbenzamide, (DEET, N,N-diéthyl-m-toluamide), le benzoate de benzyle, le sulfure de 2-hydroxyéthyl-n-octyle (MGK-874) ; le butoxypoly(propylèneglycol) ;
- les esters d'acides carboxyliques, le phtalate de diméthyle, le phtalate de diéthyle, le phtalate de dibutyle, le succinate de dibutyle, le sébaçate de dibutyle, l'adipate de dibutyle, les esters de myristyle le myristate de méthyle.

2. Utilisation d'une huile végétale selon la revendication 1, dans laquelle le composé interférant sur le comportement est mélangé à un composé surfactant et/ou à des diluants.

3. Utilisation selon la revendication 1 ou la revendication 2, dans laquelle le composé interférant sur le comportement est un agent répulsif ou dissuasif, un agent d'induction d'hyperactivité ou un irritant, un narcotique, un agent《 knock-down 》, un agent constituant une barrière physique ou un poison physique.

4. Utilisation selon l'une quelconque des revendications 1 à 3, dans laquelle l'huile végétale est choisie parmi l'huile de graine de coton, l'huile de soja, l'huile de colza, l'huile de ricin, l'huile de tournesol, l'huile d'arachide, l'huile de palme, l'huile de Carthamus tinctorius, l'huile de noix de coco, l'huile de sésame, l'huile de maïs, l'huile de graine de lin, l'huile de tung et l'huile de germe de blé.

5. Utilisation selon l'une quelconque des revendications 1 à 4, dans laquelle le diluant est l'eau ou un solvant organique approprié.

6. Utilisation selon l'une quelconque des revendications 1 à 5, dans laquelle la composition de contrôle des arthropodes est destinée à la protection des plantes contre les arthropodes suceurs.

7. Utilisation selon l'une quelconque des revendications 1 à 5, dans laquelle la composition de contrôle des arthropodes est destinée à la protection des plantes contre les homoptères (Aleurodidea) et les aphis (Aphidoidea) et les insectes à corps souple tels que les mites, les sauterelles, les insectes farineux et les thysanoptères.

8. Utilisation selon l'une quelconque des revendications précédentes, dans laquelle la composition de contrôle des arthropodes est conçue pour une application par pulvérisation.

9. Utilisation d'une huile végétale selon l'une quelconque des revendications précédentes, dans laquelle le composé interférant sur le comportement est choisi parmi le sébaçate de dibutyle, le phtalate de dibutyle, l'alcool cétylique, l'alcool laurylique, l'alcool oléylique, l'alcool stéarylique, le benzoate de benzyle, l'acide maléique, l'acide malique, l'acide succinique, le myristate de méthyle, l'acide myristique, l'acide stéarique, le DEET, le MGK-874, le 2-éthyl-1,3-hexanediol, le camphène, le camphre, l'acide citrique, le phytol, le linalol, le géraniol, la carvone, et l'huile végétale est choisie parmi l'huile de graine de coton, l'huile de soja, l'huile de colza, l'huile de ricin.

Fig 1. Effect of BIC +VO on field population of TWF (VO=3% cottonseed oil, BP = 1% dibutyl phthalate CAL=1% cetyl alc , LAI=1% lauryl alc.)